**Europäisches Patentamt**

**European Patent Office**

**Office européen des brevets**

(19)

(11) Veröffentlichungsnummer : **0 045 867**
**B2**

(12)

# NEUE EUROPÄISCHE PATENTSCHRIFT

(45) Veröffentlichungstag der neuen Patentschrift :
**28.06.89**

(51) Int. Cl.⁴ : **B 60 T 17/02**, F 16 D 43/28

(21) Anmeldenummer : **81105668.8**

(22) Anmeldetag : **20.07.81**

(54) Regeleinrichtung für einen Kompressor zum Betrieb in Kraftfahrzeugen.

(30) Priorität : 08.08.80 DE 3030094

(43) Veröffentlichungstag der Anmeldung :
17.02.82 Patentblatt 82/07

(45) Bekanntmachung des Hinweises auf die Patenterteilung : 10.08.83 Patentblatt 83/32

(45) Bekanntmachung des Hinweises auf die Entscheidung
über den Einspruch : 28.06.89 Patentblatt 89/26

(84) Benannte Vertragsstaaten :
AT BE CH DE FR GB IT LI NL SE

(56) Entgegenhaltungen :
DE--A-- 1 400 409
DE--A-- 1 964 357
DE--A-- 2 815 474
DE--A-- 2 911 085
DE--B-- 1 218 813
DE--C-- 106 440
DE--C-- 1 301 715
DE--U-- 8 021 411
FR--A-- 619 522
US--A-- 1 322 377
US--A-- 1 376 411
US--A-- 3 398 822
US--A-- 3 441 110
US--A-- 4 147 245

(73) Patentinhaber : KNORR-BREMSE AG
Moosacher Strasse 80 Postfach 401060
D-8000 München 40 (DE)

(72) Erfinder : Unger, Hans
St. Benediktstr. 7
D-8044 Unterschleissheim (DE)

EP 0 045 867 B2

Beschreibung

Die Erfindung bezieht sich auf eine Regeleinrichtung nach dem Gattungsbegriff des Patentanspruches 1.

Bei derartigen Regeleinrichtungen nach dem Stand der Technik (US-A-1 376 411) wird ein Kompressor mittels eines mit diesem starr gekuppelten Elektromotors oder, bei dessen Ausfall, durch eine vom Fahrzeug-Radsatz über ein Zahnradgetriebe und eine schaltbare Konuskupplung bestehende Verbindung angetrieben. Die Konuskupplung bestehende Verbindung angetrieben. Die Konuskupplung ist frei in eine Verlängerung der Antriebswelle des Kompressors eingesetzt und über einen Schalthebel durch Druckluftbeaufschlagung eines Schaltzylinders entgegen der Kraft einer Federeinrichtung schließbar.

Bei heute üblichen Fahrzeug-Bremsanlagen wird trotz mehrerer, bisher nicht zu behebender Mängel der Betriebsdruck in der Druckluftanlage durch ein Druckregelventil überwacht, welches bei Erreichen eines maximalen Betriebsdruckes die vom weiterlaufenden Kompressor geförderte Luft wieder in die Atmosphäre entlässt.

Es ist auch bereits bekannt, den Betriebsdruck durch Stillsetzen des Kompressors bei Erreichen der maximalen Druckhöhle zu überwachen; zum Stillsetzen wird hierbei der Antriebsmotor abgeschaltet oder eine Kupplung zum Antriebsmotor geöffnet. Die hierzu bekannten Anordnungen waren jedoch so aufwendig, störanfällig oder mit sonstigen Mängeln behaftet, dass sie in der Praxis keinen Eingang fanden.

Bei mit Kupplungen versehenen Antrieben bekannter Art (DE-A-28 15 474), welche zum Antrieb eines Gebläses verwendet werden, wird ein in einer drehbaren Nabe befindlicher Ringkolben durch Druckmittel beaufschlagt, um die Kupplung druckabhängig einrücken zu lassen; das Ausrücken bzw. Lösen der Kupplung geschieht hierbei thermostatgesteuert und mittels Federkraft. Kupplungsanordnungen dieser Bauart sind für die Regeleinrichtungen von Kompressoren nicht verwendbar, zumindest dann nicht, wenn nur baulich beschränkte Maße zur Verfügung stehen und wenn die Kupplung in Abhängigkeit des Förderdruckes ausgerückt, also gelöst werden soll. Auch ist die bei derartigen bekannten Konstruktionen vorgesehene Druckmittelzuführung mittels einer feststehenden Welle bei Kompressorantrieben der angesprochenen Art nicht verwendbar, da der zur Verfügung stehende Raum im Inneren der Kupplung für die Lagerung der Kompressorwelle, also für den Antrieb des Kompressors eingenommen wird.

Es sind fernerhin gattungsfremde, hydraulisch betätigbare Kupplungen bekannt (DE-C-1 301 715), bei welchen ein ringförmiger Kupplungskolben hydraulisch beaufschlagbar ist und mittels eines Wälzlagers, eines Ringes und Stiften auf eine Einrückscheibe eines Lamellenpaketes einzuwirken vermag; die Einrückscheibe steht außerdem unter Einwirkung von Tellerfederpaketen, welche von Zugbolzen durchsetzt sind, wobei diese die Kraft der Tellerfedern auf die Einrückscheibe weiterleiten.

Kupplungsanordnungen dieser Bauart sind in gleicher Weise wie Konstruktionen der eingangs genannten Art nicht geeignet, innerhalb baulich beengter Verhältnisse zur Regelung von Kompressoren zum Betrieb in Kraftfahrzeugen eingesetzt zu werden. Die hydraulische Betätigung derartiger Kupplungen macht es unmöglich, die von einem Kompressor erzeugte Druckluft in regelndem Sinne zur Wirkung gelangen zu lassen, dies ungeachtet der Tatsache, daß hydraulische Gebereinrichtungen der bei derartigen Kupplungen benötigten Art zum Betrieb in Kraftfahrzeugen ohnehin nicht vorgesehen sind. Es sind schließlich außer den Zugbolzen unter radialem Abstand zu diesen geführte zusätzliche Stifte erforderlich, mittels welchen das Wälzlager auf die Einrückscheibe und demnach mittelbar auf die Federpakete einwirkt. Hierbei können an der Einrückscheibe Verspannungen auftreten. Auch besteht die Gefahr eines Spiels zwischen den Kraft übertragenden Teilen der Kupplung.

Es ist Aufgabe der Erfindung, eine Regeleinrichtung der eingangs angegebenen Art zu schaffen, welche bei einfachem, nur geringe Wartung erforderndem Aufbau nur wenig Bauraum beansprucht und eine sichere Funktion gewährleistet. Weiterhin soll die Regeleinrichtung eine möglichst kleine Leistungsaufnahme aufweisen.

Die Lösung dieser Aufgabe besteht in der Ausbildung der Regeleinrichtung gemäss den Merkmalen des Patentanspruches 1.

Die Regeleinrichtung ist von äusserst kompakter Bauart, wozu insbesondere die Verwendung einer Scheibenkupplung sowie die Anordnung des Ringkolbens mit dem Wälzlager im Lagerdeckel des Kompressors beitragen. Die geringen, mit Druckluft zu füllenden Räume der Regeleinrichtung geben einen niedrigen Leistungsbedarf für die Regeleinrichtung.

Vorteilhafte Ausgestaltungen und Weiterbildungen für die Regeleinrichtung sind den Unteransprüchen entnehmbar.

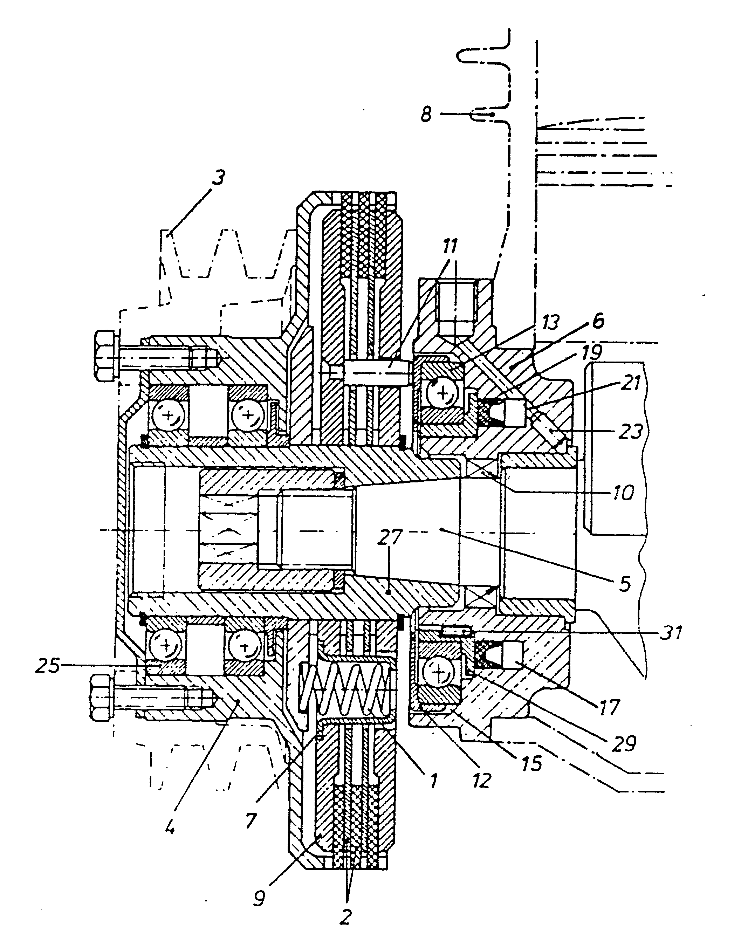

In der Zeichnung ist eine nach der Erfindung ausgebildete Regeleinrichtung im Schnitt als Ausführungsbeispiel für die Erfindung dargestellt.

Im in der Zeichnung dargestellten Ausführungsbeispiel ist eine durch Druckfedern 1 in Schliessrichtung belastete Scheibenkupplung 2 beziehungsweise Lamellenkupplung gezeigt, welche einerseits mit einem Antrieb 3 über ein Eingangsteil 4 verbunden ist. Der Antrieb 3 ist als mit dem gehäuseartig ausgebildeten Eingangsteil 4 drehfest verbundene, strichpunktiert dargestellte Keilriemenscheibe ausgebildet, wobei die Keilriemenscheibe in nicht dargestellter Weise über Keilriemen von einem Antriebsmotor, beispielsweise dem Antriebsmotor eines Kraftfahrzeuges angetrieben wird. Andererseits weist die Regeleinrichtung einen Abtrieb 5 auf, welcher den Lagerdeckel 6 für den nicht dargestellten Antriebszapfen des nur strichpunktiert angedeuteten Kompressors 8 zumindest teilweise, vorzugsweise bis zu einem im Lagerdeckel 6 gehaltenen Dichtring 10 für den Antriebszapfen, durchsetzt. Die wenigstens drei Druckfedern 1 durchsetzen unter gleichartigem Winkelabbstand zueinander das Scheiben- beziehungsweise Lamellenpaket der Scheibenkupplung 2 und sind jeweils in einer Hülse 7 geführt. Die einzelnen Hülsen 7 sind an der gemäss der Darstellung linken Seite offen und stützen an der gemäss der Darstellung rechten Seite die Druckfedern 1 ab. Die Hülsen 7 sind mittels eines radial auskragenden Flansches an einer Druckplatte 9 abgestützt, welche gleichzeitig mehrere Druckbolzen 11 trägt. Die wenigstens drei Druckbolzen 11 sind vorzugsweise unter entsprechenden Winkelabständen gleichartig verteilt zwischen den Druckfedern 1 vorgesehen und stützen sich am gemäss Darstellung rechten Ende über einen Zwischenring 12 an einem Wälzlager 13 ab. Der Zwischenring 12 und der an diesem anliegende Teil des Wälzlagers 13 sind axialverschieblich und drehbar in einer Ausnehmung 15 des Lagerdeckels 6 des Kompressors 8 geführt; die Ausnehmung 15 geht am gemäss der Darstellung rechten Ende in einen Ringraum 17 über, in welchem ein als Ringkolben dienender Dichtungsring 19 abgedichtet axialverschieblich gelagert ist. Der verhältnismässig stark dimensionierte Dichtungsring 19 weist einen nutringartigen Querschnitt auf. In den Ringraum 17 mündet ein Kanal 21, der ebenfalls im Lagerdeckel 6 verläuft und welcher über einen Rohranschluss und eine nicht dargestellte Rohrleitung beispielsweise an den vom Kompressor 8 zu füllenden, nicht dargestellten Druckluftbehälter angeschlossen ist. Der Kanal 21 verläuft schräg zur Achse des Lagerdeckels 6, so dass er den Ringraum 17 anschneidet, und endet gegenüberliegend zu seinem Rohranschluss blind, er kann dort beispielsweise durch einen Stopfen 23 verschlossen sein.

Das Scheiben- beziehungsweise Lamellenpaket der Scheibenkupplung 2 ist drehfest, aber axialverschieblich zum Teil mit dem Eingangsteil 4 und zum anderen Teil mit dem über Wälzlager 25 im Eingangsteil 4 drehbar gelagerten, dem Abtrieb 5 zugehörenden Ausgangsteil 27 gekoppelt. Das Ausgangsteil 27 ist in üblicher Weise, zum Beispiel über einen Konus, mit dem Antriebszapfen des Kompressors 8 starr zu verbinden. Zwischen der Scheibenkupplung 2 und dem Kompressor 8 kann natürlich auch in nicht dargestellter Weise ein Untersetzungsgetriebe oder dergleichen Zwischenelement eingefügt sein.

Zwischen den Dichtungsring 19 und das diesem zugewandte Teil des Wälzlagers 13 ist ein Zwischenring 29 eingeordnet, welcher vermittels einer Keilführung 31 undrehbar, aber axialverschieblich im Lagerdeckel 6 geführt ist.

Bei laufendem Antriebsmotor, beispielsweise des Fahrzeuges, wird der mit der Scheibenkupplung in Verbindung stehende Kompressor bei Umlauf der als Antrieb 3 dargestellten Keilriemenscheibe über das Eingangsteil 4, das durch die Druckfedern 1 zusammengepresste Scheiben- bzw. Lamellenpaket der Scheibenkupplung 2, das Ausgangsteil 27 und den Abtrieb 5 angetrieben, so dass der Kompressor mit einer gewissen Leistungsaufnahme läuft.

Hat der Druck im vom Kompressor gespeisten Druckluftbehälter einen bestimmten Grenzwert erreicht, so wirkt dieser Druck über den an den Druckluftbehälter angeschlossenen Kanal 21 auf den Dichtungsring 19 ein, derart, dass dieser Dichtungsring 19 gemäss der Darstellung nach links verschoben wird. Bei dieser Verschiebung wird über den Zwischenring 29 und das Wälzlager 13 sowie den Zwischenring 12 und die an diesem anliegenden Druckbolzen 11 die Druckplatte 9 entgegen der Kraft der Druckfedern 1 ebenfalls nach links verschoben, wodurch die Pressung des Scheiben- bzw. Lamellenpaketes der Scheibenkupplung 2 aufgehoben und die Scheibenkupplung 2 somit ausgerückt wird. Die Antriebsverbindung zwischen dem Antrieb 3 und dem Kompressor 8 ist damit unterbrochen, und der Kompressor bleibt bei weiterhin rotierendem Antrieb 3 stehen.

Sinkt der Druck in dem vom Kompressor 8 zu speisenden Druckluftbehälter wieder ab, dann überwindet die Kraft der Druckfedern 1 die im Ringraum 17 entgegenwirkende Kraft der Druckluft, so dass die Scheibenkupplung 2 wieder einrückt und die Antriebsverbindung zwischen dem Antrieb 3 und dem Abtrieb 5 wieder hergestellt wird. Der Kompressor 8 läuft dann wieder in normaler Weise und fördert Druckluft.

In Abwandlung zum vorstehend beschriebenen Ausführungsbeispiel ist es auch möglich, dass das Wälzlager 13 gegebenenfalls unter Zwischenordnung des Zwischenringes 12 über die Hülsen 7 direkt auf die Druckfedern 1 einwirkt, um diese bei Übersteigen eines vorbestimmten Druckes zusammenzudrücken. Weiterhin ist es möglich, in die Druckluftverbindung zwischen dem Druckluftbehälter und dem Ringraum 17 wahlweise Rückschlagventile unterschiedlicher Öffnungscharakteristik oder bei Erreichen des vorgesehenen Maximaldruckes schaltende Überwachventile einzusetzen, um das Ab- und Einschalten des Kompressors den erforderlichen Druckverhältnissen anzupassen, insbesondere einerseits ein schlagartiges Einkuppeln, andererseits aber auch ein zu langes Durchschleifen der Scheibenkupplung 2 zu vermeiden. Bei Einordnen von Schaltventilen können die Druckfedern 1 allein im Hinblick auf die Scheibenkupplung 2 bemessen werden und müssen nicht auch im Zusammenwirken mit der Kolbenfläche des Dichtringes 19 entsprechend dem vorgesehenen Schaltdruck dimensioniert werden.

**Patentansprüche**

1. Regelvorrichtung für einen Kompressor, zum Betrieb in Kraftfahrzeugen, mit einer in der Antriebsverbindung zwischen einem Antriebsmotor des Kompressors (8) und dem Kompressor (8) befindlichen Scheibenkupplung (2), welche sowohl druckabhängig vom Druck in einem vom Kompressor (8) aufladbaren Druckluftkreis als auch selbsttätig durch Federkraft schaltbar ist, wobei der Eingangsteil (4) der Scheibenkupplung (2) vom Antriebsmotor antriebbar angeordnet ist und der Abtrieb (5) der Scheibenkupplung mit der Antriebswell des Kompressors (8) verbunden ist, dadurch gekennzeichnet, daß die Scheibenkupplung durch Druckfedern (1) einrückbar ist und eine Vorrichtung zum Ausrücken bei Erreichung des maximalen Betriebsdruckes aufweist, daß die Vorrichtung einen im die Antriebswell des Kompressors (8) umschließenden Lagerdeckel (6) des Kompressors angeordneten, den Förderdruck des Kompressors führenden Kanal (21) aufweist, der in einen ebenfalls im Lagerdeckel (6) zumindest annähernd konzentrisch zum Abtrieb (5) angeordneten Ringraum (17) mündet, der seinerseits von einem in ihm verschieblich gelagerten Ringkolben (Dichtungsring 19) begrenzt ist, und daß die Vorrichtung weiterhin ein im Lagerdeckel (6) geführtes Wälzlager (13) aufweist, das einerseits axial verschieblich mit dem Ringkolben (Dichtungsring 19) und andererseits mittels die Scheiben der Scheibenkupplung mittels Bohrungen axial durchsetzender Druckbolzen (11) mit einer außerhalb des Lagerdeckels angeordneten Druckplatte (9) für die Scheibenkupplung (2) gekoppelt ist, derart, daß die Druckplatte (9) in Ausrückrichtung von den Druckbolzen (11) und in Einrückrichtung durch die Federkraft belastbar ist.

2. Regelvorrichtung nach Anspruch 1, dadurch gekennzeichnet, daß der Ringkolben als nutringartiger Dichtungsring (19) ausgebildet ist.

3. Regelvorrichtung nach einem der vorangehenden Ansprüche, dadurch gekennzeichnet, daß zwischen dem Ringkolben (Dichtungsring 19) und dem Wälzlager (13) ein axialverschieblich, aber undrehbar im Lagerdeckel (6) gelagerter Zwischenring (29) angeordnet ist, und daß zwischen dem Wälzlager (13) und den Druckbolzen (11) ein drehbar und axialverschieblich im Lagerdeckel (6) geführter Zwischenring (12) angeordnet ist.

## Claims

1. Control device for a compressor, for operation in motor vehicles, having a disc coupling (2) situated in the drive connection between a drive motor of the compressor (8) and the compressor (8), which coupling is switchable both in dependence on the pressure in a compressed air circuit loadable by the compressor (8) and also automatically by spring force, the input part (4) of the disc coupling (2) being arranged to be drivable by the drive motor, and the output (5) of the disc coupling being connected to the drive shaft of the compressor (8), characterised in that the disc coupling can be engaged by compression springs (1) and has a device for disengaging when the maximum operating pressure has been reached, in that the device has a channel (21) arranged in the bearing cover (6) of the compressor, which encloses the drive shaft of the compressor (8), and carrying the pressure of the compressor, which channel opens into an annular space (17) also arranged in the bearing cover (6) at least approximately concentrically to the output (5), which annular space in turn is limited by an annular piston (sealing ring 19) displaceably mounted therein, and in that the device also has a roller bearing (13) guided in the bearing cover (6) which is coupled on the one hand, axially displaceably, to the annular piston (sealing ring 19) and on the other hand, by means of thrust bolts (11) axially penetrating the discs of the diso coupling by means of bores, to a pressure plate (9) for the disc coupling (2) arranged outside the bearing cover, so that the pressure plate (9) can be loaded by the thrust bolts (11) in the disengaging direction and by the spring force in the engaging direction.

2. Control device according to claim 1, characterised in that the annular piston is formed as a grooved-ring-like sealing ring (19).

3. Control device according to one of the preceding claims, characterised in that between the annular piston (sealing ring 19) and the roller bearing (13) there is arranged an intermediate ring (29) mounted in the bearing cover (6) so as to be axially displaceable but non-rotatable, and in that between the roller bearing (13) and the thrust bolt (11) there is arranged an intermediate ring (12) guided rotatably and axially displaceably in the bearing cover (6).

## Revendications

1. Dispositif de réglage pour un compresseur, pour sa mise en œuvre dans un véhicule automobile, avec un embrayage à disques (2) disposé dans la liaison d'entraînement entre un moteur d'entraînement du compresseur (8) et le compresseur (8), lequel accouplement à disques est susceptible d'être commuté aussi bien en fonction de la pression qui règne dans un circuit d'air comprimé capable d'être chargé par le compresseur qu'automatiquement par la force de ressorts, l'élément menant ou d'entrée (4) de l'embrayage à disques (2) étant disposé de manière à être entraîné par le moteur d'entraînement alors que l'élément de sortie ou mené (5) de l'embrayage à disques est relié à l'arbre d'entraînement du compresseur (8), caractérisé par le fait que l'embrayage à disques est susceptible d'être amené dans sa position de fermeture ou embrayée par des ressorts de pression (1) et comporte un dispositif de débrayage lorsqu'une pression maximale de fonctionnement est atteinte, que le dispositif comporte un canal (21) agencé dans le couvercle de palier (6) du compresseur, qui entoure l'arbre d'entraînement du compresseur (8), ledit canal (21) débouchant dans une chambre annulaire (17) qui est également agencée dans le couvercle de palier (6), au moins à peu près concentriquement à l'élément mené (5), et qui à son tour est délimitée par un piston annulaire (bague d'étanchéité 19) qui y est logé à coulissement, et que le dispositif comporte, en outre, un palier à roulement (13) qui est guidé dans le couvercle de palier (6) et qui, d'une part, est accouplé, avec possibilité de déplacement axial, avec le piston annulaire (bague d'étanchéité 19) et, d'autre part, est accouplé avec une plaque de pression (9) pour l'embrayage à disques (2), disposée à l'extérieur du couvercle de palier, à l'aide de boulons de pression (11) qui traversent axialement les disques de l'embrayage à disques, au moyen de perçages, la réalisation étant telle que la plaque de pression est susceptible d'être chargée par les boulons de pression (11) dans le sens du débrayage, et par la force des ressorts dans le sens de l'embrayage.

2. Dispositif de réglage selon la revendication 1, caractérisé par le fait que le piston annulaire est réalisé sous la forme d'une bague d'étanchéité (19) du genre d'un anneau à gorges.

3. Dispositif de réglage selon l'une des revendications précédentes, caractérisé par le fait qu'entre le piston annulaire (bague d'étanchéité 19) et le palier à roulement (13) est disposée une bague (6) de façon à pouvoir se déplacer axialement, sans toutefois pouvoir tourner, et qu'entre le palier à roulement (13) et les boulons de pression (11) est disposée une bague intermédiaire (12) guidée dans le couvercle de palier (6) de manière à pouvoir y tourner et se déplacer axialement.